# FASCICULE DE BREVET EUROPEEN

(11) **EP 2 791 687 B1**
(45) Date de publication et mention de la délivrance du brevet: **21.06.2017**
(21) Numéro de dépôt: 12799216.2
(22) Date de dépôt: 13.12.2012
(51) Int. Cl.: G01P 21/02, G06T 7/00, G06T 7/20

(54) **PROCEDE ET SYSTEME D'AUTO-CALIBRATION D'UN DISPOSITIF DE MESURE DE VITESSE D'UN VEHICULE CIRCULANT DANS UN ESPACE TRIDIMENSIONNEL**
VERFAHREN UND SYSTEM ZUR AUTOMATISCHEN KALIBRIERUNG EINER VORRICHTUNG ZUR MESSUNG DER GESCHWINDIGKEIT EINES SICH IN EINEM DREIDIMENSIONALEN RAUM BEWEGENDEN FAHRZEUGS
METHOD AND SYSTEM FOR AUTO-CALIBRATION OF A DEVICE FOR MEASURING SPEED OF A VEHICLE TRAVELLING IN A THREE-DIMENSIONAL SPACE

(30) Priorité: 16.12.2011 FR 1161812
(43) Date de publication de la demande: 22.10.2014
(73) Titulaire: Morpho, 92130 Issy-les-Moulineaux (FR)
(72) Inventeur: LE GOUIL, Elise, F-92130 Issy-les-Moulineaux (FR); ROUH, Alain, F-92130 Issy-les-Moulineaux (FR)
(74) Mandataire: Le Guen-Maillet
(86) Numéro de dépôt international: PCT/EP2012/075363
(87) Numéro de publication internationale: WO 2013/087759

(56) Documents cités:
- GB-A- 2 472 793
- KR-A- 20110 130 608
- US-A- 5 742 699
- DAILEY D J ET AL: "Dynamic camera calibration of roadside traffic management cameras for vehicle speed estimation", IEEE TRANSACTIONS ON INTELLIGENT TRANSPORTATION SYSTEMS, IEEE, PISCATAWAY, NJ, USA, vol. 4, no. 2, 1 juin 2003 (2003-06-01), pages 90-98, XP011104438, ISSN: 1524-9050, DOI: 10.1109/TITS.2003.821213

## Description

La présente invention concerne un procédé d'auto-calibration d'un dispositif de mesure de vitesse d'un véhicule circulant dans un espace tridimensionnel.

Il est connu de l'état de la technique des dispositifs d'estimation de vitesse qui comportent une caméra. Ces dispositifs prennent deux images successives du véhicule, détectent des points homologues du véhicule dans ces deux images et mettent en correspondance ces points dans le plan image de la caméra. Les points appariés sont alors projetés dans l'espace tridimensionnel et la distance entre ces points projetés est alors calculée. La vitesse du véhicule est alors mesurée connaissant l'intervalle de temps qui s'est écoulé entre la prise des deux images et la distance entre paires de points homologues.

La caméra de ce type de dispositif doit être calibrée avant de pouvoir être utilisée. La calibration consiste à déterminer un jeu de paramètres, dits de calibration, qui permet de projeter, dans le plan image de cette caméra, des points définis dans l'espace tridimensionnel (système de calibration de camera - Localisation de formes polyédrique par vision monoculaire, thèse de Doctorat, Ecole des Mines de Paris, Mohamed Bénallal - 29 novembre 2002, p. 36 à p. 44 et formule 2.11 p. 42).

Il est connu de calibrer une caméra à partir d'une image acquise par extraction de points spécifiques de l'espace tridimensionnel tel que, par exemple, des marques sur la voie sur laquelle circule le véhicule (EP 1,873,716).

La calibration d'une caméra est souvent réalisée en usine ou lors d'une phase de maintenance du dispositif de mesure de vitesse. Toutefois, des dérives des paramètres de calibration peuvent se produire entre deux phases de maintenance ce qui induit dans le temps des mesures erronées des vitesses de véhicule en fonction des images prises par cette caméra.

Pour pallier ce problème, il est connu d'automatiser la calibration de la caméra lors de son utilisation. C'est le cas, par exemple, des caméras embarquées à bord de véhicules (WO 2009/142921).

Le document KR 2011/0130608 divulgue un système avec une caméra installée sur un poteau pour mesurer la vitesse des véhicules, un système annexe de mesure de la vitesse des véhicules avec un détecteur laser est utilisé pour parfaire l'auto-calibration de la dite caméra.

Toutefois, bien que ces procédés de calibration soient répétés fréquemment, ils n'assurent pas la fiabilité de la mesure de la vitesse d'un véhicule car la calibration automatique n'est pas totalement fiable, et il peut également y avoir des erreurs de mesure de vitesse non liées à la calibration et non détectables par ces méthodes.

Le problème résolu par la présente invention est de proposer une méthode de calibration qui n'utilise aucun élément de la scène autre que des véhicules, et de détecter toute incohérence entre deux dispositifs de mesure de vitesse en vue de fiabiliser la mesure de vitesse.

A cet effet, la présente invention concerne un système d'auto-calibration d'un dispositif de mesure de vitesse d'un véhicule circulant dans un espace tridimensionnel. Ce système comporte :
- des moyens pour mesurer la vitesse du véhicule à partir d'images de ce véhicule acquises par une caméra de ce dispositif de mesure de vitesse,
- un autre dispositif de mesure de vitesse, et
- des moyens pour choisir des paramètres de calibration de la caméra comme étant ceux qui minimisent une erreur calculée entre la vitesse mesurée à partir d'images de ce véhicule acquises par ladite caméra et une vitesse mesurée par ledit autre dispositif de mesure de vitesse.

Cet autre dispositif de mesure de vitesse permet ainsi de valider si la vitesse mesurée à partir d'images de ce véhicule, acquises par la caméra, est correcte et, réciproquement, le dispositif de mesure de vitesse qui comporte la caméra permet de valider si la vitesse mesurée par cet autre dispositif de mesure de vitesse est correcte. Le système permet ainsi de contrôler si la calibration de l'un des dispositifs de mesure est stable au cours du temps car toute dérive des paramètres de calibration ou aberrations de mesure par l'un ou l'autre des dispositifs peut alors être détectée par détection d'incohérence.

Selon un mode de réalisation, le système comporte aussi des moyens d'alarme qui se déclenchent lorsque l'erreur minimisée est supérieure à un seuil prédéterminé.

La comparaison de l'erreur entre les mesures de vitesse avec un seuil est particulièrement facile à mettre en oeuvre et permet, notamment, de répondre facilement aux normes réglementaires qui définissent des contraintes de précision.

Selon un autre de ses aspects, la présente invention concerne un procédé d'auto-calibration d'un dispositif de mesure de vitesse d'un véhicule circulant dans un espace tridimensionnel. Dans ce procédé, les paramètres de calibration d'une caméra de ce dispositif de mesure de vitesse sont choisis comme étant ceux qui minimisent une erreur calculée entre une vitesse du véhicule mesurée à partir d'images de ce véhicule acquises par ladite caméra et une vitesse mesurée par un autre dispositif de mesure de vitesse.

Ce procédé permet ainsi de valider si la vitesse mesurée à partir d'images de ce véhicule, acquises par la caméra, est correcte et, réciproquement, le dispositif de mesure de vitesse qui comporte la caméra permet de valider si la vitesse mesurée par cet autre dispositif de mesure de vitesse est correcte. Le procédé permet ainsi de contrôler si la calibration de la caméra du dispositif de mesure est stable au cours du temps car toute dérive des paramètres de calibration ou aberrations de mesure par l'un ou l'autre des dispositifs peut alors être détectée par détection d'incohérence.

Selon un mode de réalisation du procédé, les paramètres de calibration de la caméra sont choisis par les étapes suivantes:
- obtention d'un ensemble de jeu de paramètres de calibration, chaque jeu de paramètres de calibration définissant une projection de l'espace tridimensionnel vers le plan image de la caméra,
- détection et appariement de points homologues dans les images acquises, chacun de ces points ayant une altitude connue dans l'espace tridimensionnel,
- pour chaque jeu de paramètres dudit ensemble,
   - projection dans l'espace tridimensionnel des points ainsi appariés dans les images via le jeu courant de paramètres de calibration et à l'altitude connue,
   - mesure de la distance parcourue par le véhicule à partir des points appariés ainsi projetés dans l'espace tridimensionnel, puis de sa vitesse en exploitant l'horodatage des images, et
   - calcul d'une erreur entre la vitesse mesurée et une vitesse mesurée par un autre dispositif de mesure de vitesse,
- les paramètres de calibration de la caméra étant alors ceux du jeu de paramètres de calibration qui minimise l'erreur ainsi calculée.

Ce mode de réalisation est avantageux car il permet de prédire une mesure de vitesse soit de manière manuelle, soit de manière entièrement automatique selon que les points sont détectés automatiques à partir des images ou que ces points (ou au moins certains d'entre eux) sont choisis par un utilisateur.

Selon un mode de réalisation, le procédé comporte aussi une étape d'alarme au cours de laquelle une alarme est déclenchée lorsque l'erreur minimisée est supérieure à un seuil prédéterminé.

L'invention concerne également un programme d'ordinateur, qui peut être stocké sur un support et/ou téléchargé d'un réseau de communication, afin d'être lu par un système informatique ou un processeur. Ce programme d'ordinateur comprend des instructions pour implémenter le procédé mentionné ci-dessus, lorsque ledit programme est exécuté par le système informatique ou le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 représente schématiquement un système d'auto-calibration d'une caméra d'un dispositif de mesure de vitesse d'un véhicule circulant dans un espace tridimensionnel selon l'invention.
La Fig. 2 représente schématiquement un mode de réalisation des moyens AC et AL.
La Fig. 3 représente les étapes du procédé d'auto-calibration d'une caméra d'un dispositif de mesure de vitesse d'un véhicule circulant dans un espace tridimensionnel selon l'invention.
La Fig. 4 représente un diagramme des étapes d'un mode de réalisation du procédé pour choisir les paramètres de calibration de la caméra.

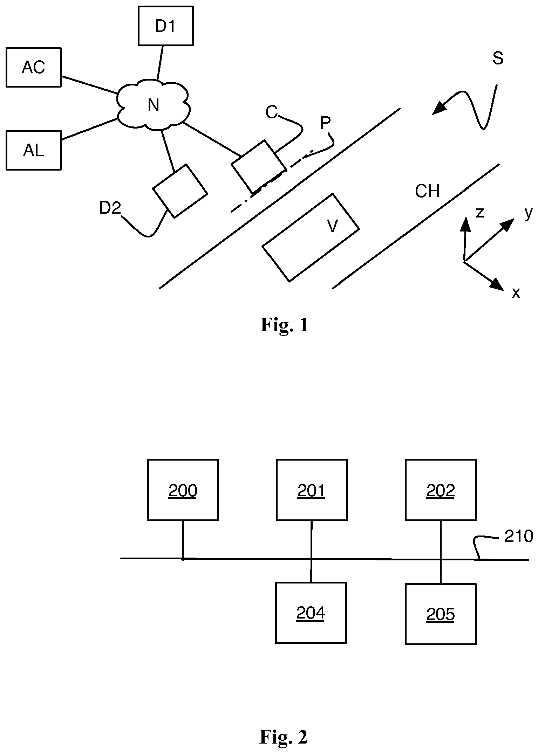

Le système S de mesure de vitesse d'un véhicule V circulant sur une voie CH est illustré à la Fig. 1. La voie CH est une scène du monde réel. Elle est donc de nature tridimensionnelle qui est ici représentée par un repère (x,y,z).

Le système S comporte un dispositif D1 de mesure de vitesse V1 à partir d'images acquises par une caméra C et un autre dispositif D2 de mesure de vitesse qui peut ou pas utiliser des images acquises par une caméra pour mesurer la vitesse V2 du véhicule V. Le système comporte aussi des moyens AC pour choisir des paramètres de calibration PC de la caméra C comme étant ceux qui minimisent une erreur E calculée entre une vitesse V1 et une vitesse V2.

Selon un mode de réalisation, le dispositif D1 comporte plusieurs caméras, par exemple deux, pour jouer le rôle d'un système de mesure de vitesse stéréoscopique. Dans ce cas, les paramètres de calibration PC de chaque caméra du dispositif D1 sont choisis en considérant cette caméra comme étant la caméra C et ce indépendamment des autres caméras du dispositif D1. La calibration entre deux caméras qui est nécessaire au fonctionnement du système stéréoscopique, est alors déduite des paramètres de calibration PC ainsi choisis pour chaque caméra de ce système.

Ces paramètres PC sont les paramètres intrinsèques et extrinsèques de la caméra C. Les paramètres intrinsèques regroupent, par exemple, la distance focale, les facteurs d'agrandissement de l'image, et les coordonnées de la projection du centre optique de la caméra sur le plan image. Les paramètres extrinsèques regroupent, par exemple, les paramètres d'une matrice rotation dans un espace tridimensionnel, les paramètres d'une translation dans cet espace. Calibrer une caméra revient alors à déterminer une valeur numérique de ces paramètres. Pour plus de détails, le lecteur pourra se référer à l'équation 2.11 p. 42 de la thèse de Doctorat intitulée Système de calibration de camera - Localisation de formes polyédrique par vision monoculaire (Ecole des Mines de Paris, Mohamed Bénallal - 29 novembre 2002).

Les dispositifs D1, la caméra C, le dispositif D2 et les moyens AC sont ici reliés par un réseau de communication N. Ils peuvent toutefois être intégrés dans un ou plusieurs appareils.

Le dispositif D2 peut être, par exemple, un cinémomètre basé sur le principe d'un radar Doppler, ou encore utilisant un laser mais ce dispositif D2 peut également comporter une caméra dont les images sont utilisées pour mesurer la vitesse du véhicule V. Il peut ainsi, par exemple, comporter les mêmes moyens que ceux du dispositif D1.

La caméra C définit un plan image P sur lequel est formée toute image acquise par cette caméra.

Selon un mode de réalisation, le système S comporte des moyens d'alarme AL qui se déclenchent lorsque l'erreur minimisée E est supérieure à un seuil prédéterminé TH. Ces moyens d'alarme AL peuvent, par exemple et de manière non exhaustive, être un avertisseur sonore ou visuel situé le long de la voie ou distant. Ces moyens d'alarme AL peuvent également être partiellement ou en totalité éloignés de la voie CH et être déclenchés à distance par un réseau de communication tel que le réseau N par exemple. Ainsi, lorsque erreur E de mesure de vitesse est supérieure au seuil TH, cette incohérence de mesure peut être remontée à une unité de gestion centrale via le réseau N et dans le cas où cette erreur ne dépasse pas ce seuil TH, alors seule la mesure de vitesse V1 et/ou V2 (ou une vitesse obtenue à partir de V1 et V2) est remontée à cette entité de gestion (ou à une autre).

La Fig. 2 représente schématiquement un mode de réalisation des moyens AC et AL.

Selon ce mode de réalisation, les moyens AC et AL sont regroupés, au moins partiellement, dans un terminal éventuellement portable tel qu'un ordinateur, qui comporte, reliés par un bus de communication 210 :
- un processeur, micro-processeur, microcontrôleur (noté µc) ou CPU (*Central Processing Unit* en anglais ou *Unité Centrale de Traitement* en français) 200 ;
- une mémoire volatile *(Random Access Memory* en anglais ou *Mémoire à Accès Aléatoire* en français) 201 ;
- une mémoire non volatile *(Read Only Memory* en anglais ou *Mémoire à Lecture Seule* en français) 202 ;
- des moyens d'interface 205 avec le réseau de communication N, comme par exemple un réseau de radiotéléphonie cellulaire ; et optionnellement,
- des moyens d'interfaçage graphique 204 tels qu'un écran tactile et/ou encore un ensemble de touches.

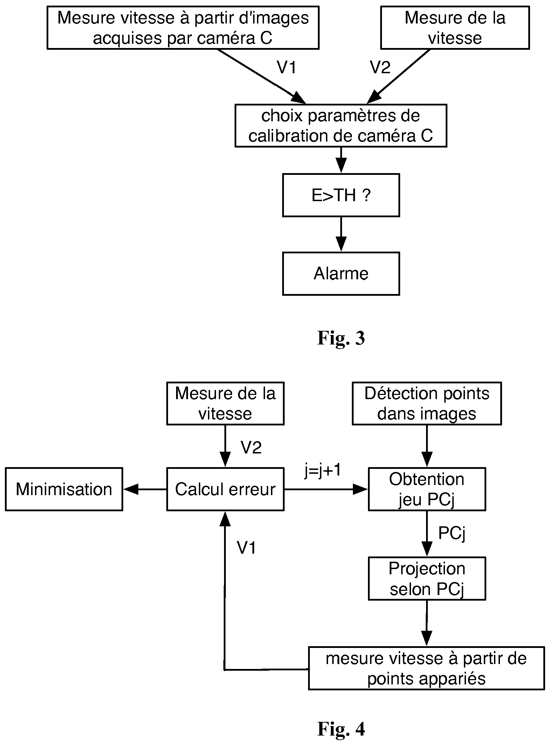

Le microcontrôleur 200 est capable d'exécuter des instructions chargées dans la mémoire volatile 201 à partir de la mémoire non volatile 202, d'une mémoire externe (non représentée), d'un support de stockage, tel qu'une carte SD ou autre, ou d'un réseau de communication. Lorsque le terminal est mis sous tension, le microcontrôleur 200 est capable de lire de la mémoire volatile 201 des instructions et de les exécuter. Ces instructions forment un programme d'ordinateur. Ce programme d'ordinateur cause la mise en oeuvre, par le microcontrôleur 200, de tout ou partie des procédés décrits ci-après en relation avec la Fig. 3 ou 4.

Les moyens AC et AL sont donc une combinaison des moyens 200, 201 et 202.

L'utilisateur peut utiliser les moyens 204 pour choisir, supprimer ou modifier, par exemple, des points dans une image acquise par la caméra C.

Tout ou partie des procédés décrits ci-après en relation avec la Fig. 3 ou 4 peut être implémenté sous forme logicielle par exécution d'un ensemble d'instructions par une machine programmable, tel qu'un DSP (*Digital Signal Processor* en anglais ou *Unité de Traitement de Signal Numérique* en français) ou un microcontrôleur, tel que le microcontrôleur 200, ou être implémenté sous forme matérielle par une machine ou un composant dédié, tel qu'un FPGA (*Field-Programmable Gate Array* en anglais ou *Circuit Intégré Programmable* en français) ou un ASIC (*Application-Specific Integrated Circuit* en anglais ou *Circuit Intégré Spécifique à une Application* en français).

La Fig. 3 représente un diagramme des étapes du procédé d'auto-calibration d'une caméra d'un dispositif de mesure de vitesse d'un véhicule circulant dans un espace tridimensionnel selon l'invention.

Au cours du procédé, la vitesse V1 du véhicule est mesurée à partir de plusieurs images du véhicule V acquises par la caméra C et une mesure de vitesse V2 est réalisée par le dispositif D2. Les paramètres de calibration PC de la caméra sont alors choisis comme étant ceux qui minimisent une erreur E calculée entre la vitesse mesurée V1 et la vitesse mesurée V2.

Selon une variante, le procédé comporte aussi une étape d'alarme au cours de laquelle une alarme est déclenchée lorsque l'erreur E est supérieure à un seuil prédéterminé TH.

La Fig. 4 représente un diagramme des étapes d'un mode de réalisation pour choisir les paramètres de calibration de la caméra.

Selon ce mode de réalisation, les paramètres de calibration de la caméra sont choisis par les étapes suivantes:
- obtention d'un ensemble de J jeu de paramètres de calibration PCj (j=1 à J), chaque jeu de paramètres de calibration PCj définissant une projection de l'espace tridimensionnel (x,y,z) vers le plan image de la caméra,
- détection et appariement de points homologues dans les images acquises, chacun de ces points ayant une altitude h selon l'axe z de l'espace tridimensionnel (x,y,z) qui est connu,
- pour chaque jeu de paramètres PCj dudit ensemble,
   - projection dans l'espace tridimensionnel (x,y,z=h) des points ainsi appariés dans les images via le jeu PCj courant de paramètres de calibration,
   - mesure de la distance parcourue par le véhicule à partir des points appariés ainsi projetés dans l'espace tridimensionnel, puis de sa vitesse V1 en exploitant l'horodatage des images,
   - calcul d'une erreur Ej entre la vitesse mesurée V1 et une vitesse V2 mesurée par le dispositif D2,
- les paramètres PC de calibration de la caméra étant alors ceux du jeu de paramètres de calibration PCj qui minimise l'erreur Ej ainsi calculée.

La détection de points entre les images acquises par la caméra C est soit automatique, soit semi-automatique, soit manuelle selon la qualité des images et les informations disponibles sur le système. Une détection manuelle correspond au cas où l'utilisateur choisit tous les points spécifiques dans les images et une détection semi-automatique correspond au cas où l'utilisateur ne choisit, ne supprime et/ou n'ajoute que quelques points spécifiques dans au moins l'une des images acquises par la caméra C.

Avantageusement, la détection de points dans chaque image acquise et l'appariement de points entre les images acquises utilisent une méthode de lecture automatique de plaques d'immatriculation à partir d'une image. Les points détectés sont alors ceux relatifs aux bords des plaques qui sont détectées dans les images et la connaissance ou une estimation même imprécise de la hauteur de plaque permet alors de déterminer l'altitude des points appariés et de projeter alors dans l'espace tridimensionnel les points appariés dans les images avec cette altitude et ainsi de mesurer la vitesse du véhicule. Ceci est particulièrement avantageux dans des implantations de type « pont » où la variabilité de hauteur des plaques reste faible devant la hauteur du système de prise de mesure, ce qui permet de garantir la précision de la mesure de vitesse.

Il est également avantageux que la détection de points dans chaque image acquise et l'appariement de points entre les images acquises utilisent une méthode de reconnaissance de la marque/modèle ou d'authentification de véhicules. Les points détectés sont alors ceux qui sont situés à des dispositions particulières de la carrosserie qui définissent, en particulier l'altitude de ces points, et qui sont préalablement connues grâce à une connaissance du modèle 3D du constructeur. Seule la connaissance d'un ou de quelques modèles est alors nécessaire car il suffit seulement de quelques passage de véhicules connus pour calibrer le système.

Avantageusement, la détection de points dans chaque image acquise et l'appariement de points entre les images acquises utilisent une méthode de détection d'ellipse appliquée aux roues de véhicules telle que décrite, par exemple, dans les articles *Location Estimation and Trajectoire Prédiction of Moving Lateral Vehicle Using Two Wheel Shapes Information in 2-D Latéral Vehicle Images by 3-D,* Computer Vision Techniques, Chih-Chiun Lai' and Wen-Hsiang Tsai, ou encore *Matching 2-D Ellipses to 3-D Circles with Application to Vehicle Pose Identification* Marcus Hutter and Nathan Brewer - December 2009, plus particulièrement partie 2 : "2D Ellipse Detection". Une telle méthode permet de détecter les points de contact roue/sol. Ces points représentent une altitude connue et répétable pour le système et peuvent donc être déterminés automatiquement par une pré-localisation des zones de contact par détection des roues. Un affinage dans leur voisinage local des points ainsi détectés peut être utilisé en complément pour améliorer cette détection des points. Une méthode de détection de contours peut, par exemple, être utilisée à cet effet.

Avantageusement, une méthode de corrélation peut, par exemple être utilisée pour quantifier et contribuer au choix des appariements des points dans les images utilisées pour la mesure de la vitesse du véhicule dans l'espace tridimensionnel.

## Revendications

1. Procédé d'auto-calibration d'un dispositif (D1) de mesure de vitesse de véhicule à partir d'images acquises par au moins une caméra (C) dudit dispositif (D1), ledit procédé comportant les étapes suivantes :
- une étape de mesure de la vitesse d'un véhicule au moyen dudit dispositif (D1),
- une étape de mesure de la vitesse dudit même véhicule au moyen d'un autre dispositif de mesure de vitesse (D2) distinct du dispositif de mesure de vitesse (D1),
- une étape de comparaison des vitesses respectivement mesurées aux étapes précédentes,
- une étape de calibration dudit dispositif (D1) en fonction du résultat de ladite étape de comparaison,
**caractérisé en ce qu'**il comprend en outre:
- une étape d'obtention d'un ensemble de jeux de paramètres de calibration de la caméra (C) dudit dispositif de mesure de vitesse (D1), chaque jeu de paramètres de calibration définissant une projection d'un espace tridimensionnel à l'intérieur duquel circulent les véhicules vers un plan image de ladite caméra (C),
- ladite étape de mesure de la vitesse au moyen dudit dispositif (D1) calculant la vitesse (V1) dudit véhicule pour chacun des jeux de paramètres de calibration,
- ladite étape de comparaison étant une étape de calcul d'une erreur pour chaque jeu de paramètres de calibration entre la vitesse (V1) ainsi calculée et la vitesse (V2) mesurée au moyen dudit dispositif de mesure de vitesse (D2),
- ladite étape de calibration étant une étape de choix du jeu de paramètres de calibration pour lequel l'erreur ainsi calculée est la plus faible.

2. Procédé selon la revendication 1, **caractérisé en ce que** ladite étape de mesure de vitesse au moyen dudit dispositif (D1) comprend les étapes suivantes :
- une étape d'acquisition de plusieurs images par ladite caméra (C),
- une étape de détection dans lesdites images acquises par ladite caméra (C) de points homologues d'une image à une autre dudit véhicule,
- une étape d'appariement desdits points homologues détectés desdites images acquises, et
- une étape de projection dans l'espace tridimensionnel des points ainsi appariés prenant en compte le jeu de paramètres de calibration considéré,
- une étape de mesure de la distance parcourue par le véhicule à partir des points appariés ainsi projetés dans l'espace tridimensionnel,
- une étape de calcul la vitesse dudit véhicule en exploitant, pour chaque point apparié, l'horodatage de l'image acquise correspondante.

3. Procédé selon la revendication 2, **caractérisé en ce que** lesdits points homologues détectés ont, dans l'espace tridimensionnel, une altitude (h) connue.

4. Procédé d'autocalibration selon une des revendications précédentes, **caractérisé en ce que** l'étape de détection inclut une étape de reconnaissance de la marque/modèle ou d'authentification dudit véhicule, les points homologues détectés par l'étape de détection étant ceux qui sont situés à des dispositions particulières de la carrosserie du véhicule reconnu ou authentifié dont l'altitude (h) est préalablement connue.

5. Procédé d'autocalibration selon une des revendications précédentes, **caractérisé en ce que** lesdits points homologues détectés par ladite étape de détection sont relatifs aux bords des plaques d'immatriculation des véhicules détectées dans les images acquises par la caméra (C).

6. Procédé d'autocalibration selon la revendication 1 ou 2, **caractérisé en ce que** l'étape de détection utilise une méthode de détection d'ellipse appliquée aux roues de véhicules, les points homologues détectés par l'étape de détection étant les points de contact roue/sol dudit véhicule.

7. Procédé selon une des revendications précédentes, **caractérisé en ce qu'**il comporte aussi une étape d'alarme au cours de laquelle une alarme est déclenchée lorsque l'erreur est supérieure à un seuil prédéterminé.

8. Système d'auto-calibration d'un dispositif (D1) de mesure de vitesse d'un véhicule circulant dans un espace tridimensionnel à partir d'images acquises par au moins une caméra (C) dudit dispositif (D1), ledit système comportant:
- ledit dispositif (D1) pour mesurer la vitesse d'un véhicule,
- un autre dispositif de mesure de vitesse (D2) distinct du dispositif de mesure de vitesse (D1),
- des moyens de comparaison des vitesses respectivement mesurées par lesdits dispositifs de mesure de vitesse,
- des moyens de calibration dudit dispositif (D1) en fonction du résultat de la comparaison effectuée par lesdits moyens de comparaison,
**caractérisé en ce qu'**il comprend en outre:
- des moyens d'obtention d'un ensemble de jeux de paramètres de calibration de la ou une caméra (C) dudit dispositif de mesure de vitesse (D1), chaque jeu de paramètres de calibration définissant une projection de l'espace tridimensionnel vers le plan image de ladite caméra (C),
- lesdits moyens de mesure de la vitesse calculant la vitesse (VI) dudit véhicule pour chacun des jeux de paramètres de calibration,
- lesdits moyens de comparaison calculant une erreur pour chaque jeu de paramètres de calibration entre la vitesse (V1) ainsi calculée et la vitesse (V2) mesurée au moyen dudit dispositif de mesure de vitesse (D2),
- lesdits moyens de calibration choisissant le jeu de paramètres de calibration pour lequel l'erreur ainsi calculée est la plus faible.

9. Programme d'ordinateur, **caractérisé en ce qu'**il comprend des instructions pour mettre en oeuvre, par un système conforme à la revendication 8 précédente, un procédé d'autocalibration selon l'une des revendications 1 à 7 lorsque ledit programme est exécuté par un processeur du système.

10. Moyens de stockage, **caractérisés en ce qu'**ils stockent un programme d'ordinateur comprenant des instructions pour mettre en oeuvre, par un système conforme à la revendication 8 précédente, un procédé d'autocalibration selon l'une des revendications 1 à 7, lorsque ledit programme est exécuté par un processeur du système.

## Patentansprüche

1. Selbstkalibrierungsverfahren einer Vorrichtung zum Messen der Geschwindigkeit eines Fahrzeugs ausgehend von Bildern, die durch wenigstens eine Kamera (C) der genannten Vorrichtung (D1) erfassten wurden, wobei das genannte Verfahren die folgenden Schritte umfasst:
- einen Schritt des Messens der Geschwindigkeit eines Fahrzeugs mittels der genannten Vorrichtung (D1),
- einen Schritt des Messens der Geschwindigkeit desselben genannten Fahrzeugs mittels einer weiteren, von der Geschwindigkeitsmessvorrichtung (D1) gesonderten Geschwindigkeitsvorrichtung (D2),
- einen Schritt des Vergleichens der jeweils in den vorhergehenden Schritten gemessenen Geschwindigkeiten,
- einen Schritt des Kalibrierens der genannten Vorrichtung (D1) in Abhängigkeit vom Ergebnis des genannten Vergleichsschritts,
**dadurch gekennzeichnet, dass** das Verfahren zudem folgendes umfasst :
- einen Schritt des Erhaltens einer Reihe von Parametersätzen zur Kalibrierung der Kamera (C) der genannten Geschwindigkeitsmessvorrichtung (D1), wobei jeder Kalibrierungsparametersatz eine Projektion eines dreidimensionalen Raums definiert, in dem sich Fahrzeuge auf eine Abbildungsebene der genannten Kamera (C) zubewegen,
- wobei der genannte Schritt der Geschwindigkeitsmessung mittels der genannten Vorrichtung (D1) die Geschwindigkeit (V1) des genannten Fahrzeugs für jeden der Kalibierungsparametersätze berechnet,
- wobei der genannte Vergleichsschritt ein Schritt ist, der im Berechnen eines Fehlers für jeden Kalibrierungsparametersatz zwischen der derart berechneten Geschwindigkeit (V1) und der, mittels der genannten Geschwindigkeitsmessvorrichtung (D2) gemessenen Geschwindigkeit (V2) besteht.
- wobei der genannte Kalibrierungsschritt ein Schritt ist, der im Auswählen desjenigen Kalibrierungsparametersatzes besteht, für den der derart berechnete Fehler der kleinste ist.

2. Verfahren nach Patentanspruch 1, **dadurch gekennzeichnet, dass** der genannte Schritt der Geschwindigkeitsmessung mittels der genannten Vorrichtung (D1) die folgenden Schritte umfasst:
- einen Schritt des Erfassens mehrerer Bilder durch die genannte Kamera (C),
- einen Schritt des Erkennens in den genannten, durch die genannte Kamera (C) erfassten Bildern von homologen Punkten zwischen einem und einem anderen Bild des genannten Fahrzeugs,
- einen Schritt des Paarens der genannten erkannten homologen Punkte der genannten erfassten Bilder,
- einen Schritt des Projizierens der derart gepaarten Punkte in den dreidimensionalen Raum unter Berücksichtigung des betreffenden Kalibrierungsparametersatzes,
- einen Schritt des Messens der, von dem Fahrzeug zurückgelegten Entfernung ausgehend von den derart in den dreidimensionalen Raum projizierten gepaarten Punkten,
- einen Schritt des Berechnens der Geschwindigkeit des genannten Fahrzeugs unter Nutzung des Zeitstempels für jeden gepaarten Punkt des entsprechenden erfassten Bilds.

3. Verfahren nach Patentanspruch 2, **dadurch gekennzeichnet, dass** die genannten erkannten homologen Punkte in dem dreidimensionalen Raum eine bekannte Höhe (h) aufweisen.

4. Selbstkalibrierungsverfahren nach einem der vorangehenden Patentansprüche, **dadurch gekennzeichnet, dass** der Erkennungschritt einen Schritt des Ausmachens der Marke/des Modells oder der Authenfizierung des genannten Fahrzeugs beinhaltet, wobei die, im Erkennungsschritt erkannten homologen Punkte diejenigen sind, die sich an bestimmten Stellen des erkannten oder authentifizierten Fahrzeugs befinden, deren Höhe (h) im voraus bekannt ist.

5. Selbstkalibrierungsverfahren nach einem der vorhergehenden Patentansprüche, **dadurch gekennzeichnet, dass** sich die, im Erkennungsschritt erkannten genannten homologen Punkte auf die Ränder der Kennzeichenschilder beziehen, die in den, durch die Kamera (C) erfassten Bildern erkannt wurden.

6. Selbstkalibrierungsverfahren nach einem der vorhergehenden Patentansprüche, **dadurch gekennzeichnet, dass** der Erkennungsschritt ein auf die Fahrzeugräder angewandtes Verfahren zur Erkennung von Ellipsen nutzt, wobei die im Erkennungsschritt erkannten homologen Punkte die Kontaktpunkte zwischen Rad und Boden des genannten Fahrzeugs sind.

7. Selbstkalibrierungsverfahren nach einem der vorangehenden Patentansprüche, **dadurch gekennzeichnet, dass** es zudem einen Alarmschritt beinhaltet, in dessen Verlauf ein Alarm ausgelöst wird, wenn der Fehler über einer vorbestimmten Schwelle liegt.

8. Selbstkalibrierungsverfahren einer Vorrichtung (D1) zum Messen der Geschwindigkeit eines, sich in einem dreidimensionalen Raum bewegenden Fahrzeugs ausgehend von, durch wenigstens eine Kamera (C) der genannten Vorrichtung (D1) erfassten Bildern, wobei das System folgendes beinhaltet :
- die genannte Vorrichtung (D1) zum Messen der Geschwindigkeit eines Fahrzeugs,
- eine weitere, von der Geschwindigkeitsmessvorrichtung (D1) gesonderte Geschwindigkeitsmessvorrichtung (D2),
- Mittel, um die jeweils von den genannten Geschwindigkeitsmessvorrichtungen gemessenen Geschwindigkeiten zu vergleichen,
- Mittel, um die genannte Vorrichtung (D1) in Abhängigkeit von dem Ergebnis des, von den genannten Vergleichsmitteln durchgeführten Vergleichs zu kalibrieren,
**dadurch gekennzeichnet, dass** das Verfahren zudem folgendes umfasst :
- Mittel, um eine Reihe von Kalibrierungsparametersätzen der oder einer Kamera (C) der genannten Geschwindigkeitsmessvorrichtung (D1) zu erhalten, wobei jeder Kalibrierungsparametersatz eine Projektion des dreidimensionalen Raums auf die Bildebene der genanten Kamera (C) definiert,
- wobei die genannten Geschwindigkeitsmessmittel die Geschwindigkeit (V1) des genannten Fahrzeugs für jeden der Kalibrierungsparametersätze berechnet,
- wobei die genannten Vergleichsmittel für jeden Kalibriergungsparametersatz einen Fehler zwischen der derart berechneten Geschwindigkeit (V1) und der mittels der genannten Geschwindigkeitsmessvorrichtung (D2) gemessenen Geschwindigkeit (V2) berechnet,
- wobei die genannten Kalibrierungsmittel den Kalibrierungsparametersatz auswählen, für den der derart berechnete Fehler der kleinste ist.

9. Computerprogramm, **dadurch gekennzeichnet, dass** es Instruktionen umfasst, um ein Autokalibrierungsverfahren nach einem der Patentansprüche 1 bis 7 durch ein System nach dem vorhergehenden Patentanspruch 8 umzusetzen, wenn das genannte Programm von einem Prozessor des Systems ausgeführt wird.

10. Speichermittel, **dadurch gekennzeichnet, dass** sie ein Computerprogramm speichern, das Instruktionen umfasst, um ein Autokalibrierungsverfahren nach einem der Patentansprüche 1 bis 7 durch ein System nach dem vorhergehenden Patentanspruch 8 umzusetzen, wenn das genannte Programm von einem Prozessor des Systems ausgeführt wird.

## Claims

1. Method for self-calibration of a device (D1) for measuring speed of a vehicle from images acquired by at least one camera (C) of said device (D1), said method comprising the following steps:
- a step of measurement of the speed of a vehicle by means of said device (D1),
- a step of measurement of the speed of said same vehicle by means of another speed measuring device (D2) distinct from the speed measuring device (D1),
- a step of comparison of the speeds respectively measured in the preceding steps,
- a step of calibration of said device (D1) as a function of the result of said comparison step,
**characterized in that** it further comprises:
- a step of obtaining of a group of sets of calibration parameters of the camera (C) of said speed measuring device (D1), each set of calibration parameters defining a projection of a three-dimensional space within which the vehicles are travelling towards an image plane of said camera (C),
- said step of measuring speed by means of said device (D1) calculating the speed (V1) of said vehicle for each of the sets of calibration parameters,
- said comparison step being a step of calculation of an error for each set of calibration parameters between the speed (V1) thus calculated and the speed (V2) measured by means of said speed measuring device (D2),
- said calibration step being a step of selection of the set of calibration parameters for which the error thus calculated is the lowest.

2. Method according to Claim 1, **characterized in that** said step of measuring speed by means of said device (D1) comprises the following steps:
- a step of acquisition of several images by said camera (C),
- a step of detection in said images acquired by said camera (C) of homologous points from one image to another of said vehicle,
- a step of pairing of said detected homologous points of said acquired images, and
- a step of projection in the three-dimensional space of the points thus paired taking into account the set of calibration parameters considered,
- a step of measurement of the distance travelled by the vehicle from the paired points thus projected in the three-dimensional space,
- a step of calculation of the speed of said vehicle by using, for each paired point, the time stamping of the corresponding acquired image.

3. Method according to Claim 2, **characterized in that** said detected homologous points have, in the three-dimensional space, a known altitude (h).

4. Self-calibration method according to one of the preceding claims, **characterized in that** the detection step includes a step of recognition of the make/model or of authentication of said vehicle, the homologous points detected by the detection step being those which are situated at particular positions of the bodywork of the recognized or authenticated vehicle whose altitude (h) is previously known.

5. Self-calibration method according to one of the preceding claims, **characterized in that** said homologous points detected by said detection step relate to the edges of the registration plates of the vehicles detected in the images acquired by the camera (C).

6. Self-calibration method according to Claim 1 or 2, **characterized in that** the detection step uses an ellipse detection method applied to the wheels of vehicles, the homologous points detected by the detection step being the wheel/ground contact points of said vehicle.

7. Method according to one of the preceding claims, **characterized in that** it also comprises an alarm step during which an alarm is triggered when the error is above a predetermined threshold.

8. System for self-calibration of a device (D1) for measuring speed of a vehicle travelling in a three-dimensional space from images acquired by at least one camera (C) of said device (D1), said system comprising:
- said device (D1) for measuring the speed of a vehicle,
- another speed measuring device (D2) distinct from the speed measuring device (D1),
- means for comparing speeds respectively measured by said speed measuring devices,
- means for calibrating said device (D1) as a function of the result of the comparison made by said comparison means,
**characterized in that** it further comprises:
- means for obtaining a group of sets of calibration parameters of the or a camera (C) of said speed measuring device (D1), each set of calibration parameters defining a projection of the three-dimensional space towards the image plane of said camera (C),
- said speed measuring means calculating the speed (V1) of said vehicle for each of the sets of calibration parameters,
- said comparison means calculating an error for each set of calibration parameters between the speed (V1) thus calculated and the speed (V2) measured by means of said speed measuring device (D2),
- said calibration means selecting the set of calibration parameters for which the error thus calculated is the lowest.

9. Computer program, **characterized in that** it comprises instructions for implementing, by a system according to the preceding Claim 8, a self-calibration method according to one of Claims 1 to 7 when said program is run by a processor of the system.

10. Storage means, **characterized in that** they store a computer program comprising instructions for implementing, by a system according to the preceding Claim 8, a self-calibration method according to one of Claims 1 to 7, when said program is run by a processor of the system.
